# EUROPEAN PATENT SPECIFICATION

(11) **EP 0 705 363 B1**
(45) Date of publication and mention of the grant of the patent: **02.05.1997**
(21) Application number: 92905721.4
(22) Date of filing: 04.03.1992
(51) Int. Cl.: D21C 11/12

(54) **METHOD OF FIRING BLACK LIQUOR IN RECOVERY BOILERS AND A RECOVERY BOILER FOR FIRING BLACK LIQUOR**
VERFAHREN ZUR VERBRENNUNG VON SCHWARZLAUGE IM RÜCKGEWINNUNGSKESSEL UND RÜCKGEWINNUNGSKESSEL DAFÜR
PROCEDE DE BRULAGE DE LIQUEUR NOIRE DANS DES CHAUDIERES DE RECUPERATION ET CHAUDIERE DE RECUPERATION UTILISEE POUR LE BRULAGE DE LIQUEUR NOIRE

(30) Priority: 18.03.1991 SE 9100814
(43) Date of publication of application: 10.04.1996
(73) Proprietor: GÖTAVERKEN ENERGY AKTIEBOLAG, S-402 75 Göteborg (SE)
(72) Inventor: OLAUSSON, Lars, S-424 53 Angered (SE)
(74) Representative: Kristiansen, Alf P.
(86) International application number: PCT/SE92/00134
(87) International publication number: WO 92/16688

(56) References cited:
- Dialog Information Services, File 350, World Patent Index 63-80, Dialog Accession no. 002245692, WPI Accession no. 79-44888B/24, MITSUBISHI HEAVY IND KK: "Removing nitrogen oxide(s) from soda recovery boiler waste gas by stepwise admission of sec. air; PULP MILL EFFLUENT"; & JP,A,54 055 603, (790502) 7924 (Basic).
- Dialog Information Services, File 350, World Patent Index 63-80, Dialog Accession no. 002245693, WPI Accession no. 79-44889B/24, MITSUBISHI HEAVY IND KK: "Pulp mill effluent combustion - includes introducing air into furnace of soda-recovering boiler to reduce nitrogen monoxide generation"; & JP,A,54 055 604 (790502) 7924 (Basic).
- Dialog Information Services, File 350, World Patent Index 63-80, Dialog Accession no. 002556168, WPI Accession no. 80-74191C/42, MITSUBISHI HEAVY IND KK: "Nitrogen oxide(s) removal from pulp mill soda recovery boiler waste by spraying with ac. soln. of ammonia and hydrogen sulphide"; & JP,A,55 114 333, (800903) 8042 (Basic).
- Dialog Information Services, File 350, World Patent Index 63-80, Dialog accession no. 002247324, WPI accession no. 79-46520B/25, MITSUBISHI HEAVY IND KK: "Reducing nitrogen oxide conon. in waste gas of boiler recovering sodium, using waste pulp soln. as fuel"; & JP,A,54 059 402, (790514) 7925 (Basic).

## Description

### Field of the invention:

The present invention relates to a method for firing black liquor in recovery boilers. The invention comprises also a recovery boiler for carrying out the method according to the invention.

### Prior art:

Recovery boilers for firing black liquor obtained through digesting of cellulose are well-known since many decades. Their object is partly to create energy through the firing, partly to recover chemicals used during the digesting of the cellulose and which are released in a melt shape during the firing and tapped at the bottom part of the recovery boiler. Recovery boilers are large plants and they create besides much energy and recovered chemical substances also much fumes. These fumes contain inter alia nitrogen oxides made at the firing of the liquor. These oxides come partly from nitrogen containing materials in the liquor, partly from the nitrogen in the combustion air. The firing in a recovery boiler occurs at a relatively low temperature, about 1.200°C, and one presumes that the main part of the nitrogen oxides come from the black liquor.

### The problem:

During recent years continually stricter demands on the effluent into the atmosphere of nitrogen oxides have been introduced. It is commonly known that these oxides contribute to the acidifying and further unfavourable influence on the nature. The contents of nitrogen oxides which are emitted from the recovery boilers of the forest industry are however low compared to those coming from cars etc. Normally the contents is within 40-70 mg NO₂/MJ but these values must be lowered appreciably in the future.

The factors which influence the formation of nitrogen oxides are the amount of nitrogen in the fuel, how the nitrogen is bound, the speed of heating, the exposing time, the temperature and the content of oxygen. The most important parameter seems, however, to be the amount of oxygen fed. By lowering the excess of air and thereby lower the content of oxygen in the firing area it is possible to lower the formation of nitrogen oxides. At the same time as the oxygen content sinks to a level perhaps under 2-3 percent by volume the contents of carbon monoxide will however increase to very high values by the incomplete firing of carbon. One has therefore earlier proposed to maintain a low content of oxygen in the lower part of the recovery boiler for formation of a small amount of nitrogen oxides and combine these low oxygen content with a final firing of the remaining carbon monoxide in an excess air register at a higher level in the recovery boiler. It is important that the carbon monoxide is oxidised to carbon dioxide for obtaining a satisfactory energy development, but at this latter combustion also the content of nitrogen oxides increases (see e.g. JP-A-54055603).

One has also proposed to add reducing gas such as ammonia or city gas above the area of feeding the liquor to obtain a reduction of nitrogen oxides formed. One has thereafter added air for final combustion of the components in the gases which can be burned and develop further energy.

Despite all these attempts to perform the firing in such a way that low contents of nitrogen oxides are created one has not yet obtained a satisfactory combustion method. The contents of nitrogen oxides are still too large.

The invention:

Through the present invention one has however brought about a method at the combustion of black liquor in recovery boilers for obtaining fumes having a low content of nitrogen oxides wherein a part of the combustion air is fed as a last portion at a very highly located level so that a reducing atmosphere without extra addition of reduction gases exist from the area of the feeding of the black liquor to the last air addition during a time of at least 3-5 seconds.

The last portion of the combustion air can according to the invention be added in two stages at two highly located levels.

The amount of combustion air that according to the invention shall be added at this highly positioned level is about 5-50%, preferably 5-10% of the total combustion air.

The method according to the invention also comprises that the content of nitrogenoxides in the fumes are controlled by means of a steering system which automatically controls the addition of air to the different levels.

The invention also comprises a recovery boiler for firing of black liquor according to the method described. It comprises means for introducing black liquor positioned at the lower part of the boiler, means for the addition of primary, secondary and tertiary combustion air, said means being positioned at different levels at the lower part of the boiler and means for the addition of quarternary air at a very highly located level in the boiler so that a reducing atmosphere without extra addition of reduction gases exists from the area of feeding the the black liquor to said quaternary combustion air addition during a period of time of at least 3-5 seconds.

The recovery boiler according to the invention may have the means for the addition of quarternary air located at one or more levels about 10-20 meters above the level of feeding the black liquor.

The recovery boiler according to the invention can be provided with two rows of supply openings for feeding the quarternary air and one level can be about 13 meters and the other about 19 meters above the level of feeding the black liqour.

According to the invention it is suitable that the uppermost air feeding openings are located in the area where the boiler is most narrow, i.e. where the so called inner "nose" is arranged.

Finally the recovery boiler according to the invention is characterized in that it includes a controlling system for automatic controlling the different feeding streams of the combustion air.

The invention will in the following be described closer in connection with the attached drawing which schematically shows a recovery boiler according to the invention in section.

### Detailed describtion of the invention:

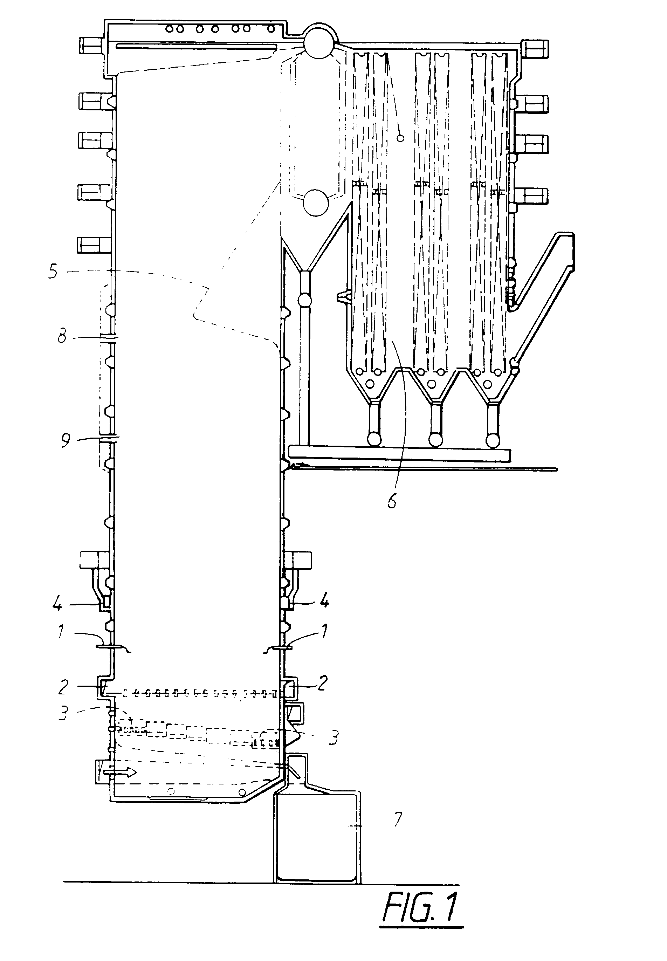

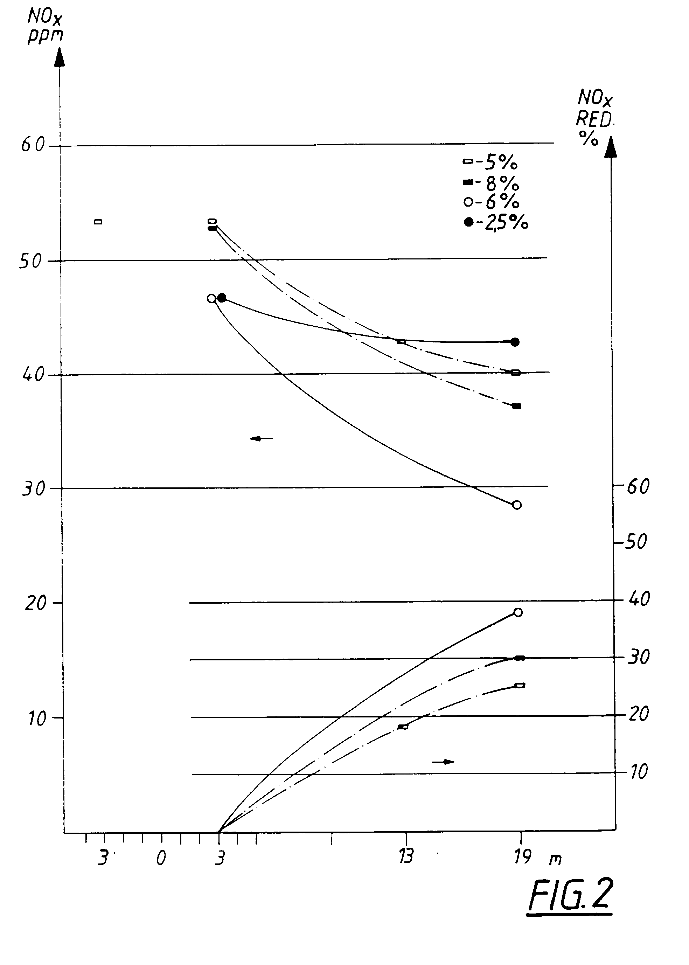

The recovery boiler according to fig 1 which is of a conventional kind includes black liquor spray nozzles 1 located in the lower part of the recovery boiler. Below these black liquor spray nozzles 1 openings 2 for feeding of secondary air is arranged. At this level also a starting burner is arranged. Below the addition of secondary air openings 3 for primary air is arranged. Above the black liquor spray nozzles 1 openings 4 for feeding of tertiary air is arranged. The boiler includes also conventional means such as the narrow part 5 in the upper part of the boiler called "nose" and heat exchanger 6 of conventional kind. Below the boiler there is finally a collecting receptacle 7 for melt and recovered chemical substances which flow down along the walls of the receptable and which substantially consist of known sodium salts.

At a higher level in the boiler near the area where the "nose" 5 is one has according to the invention arranged further air feeding openings 8. These may be several, suitably eight, but the number is not critical. Through these air feeding openings one part of the tertiary air which normally should have been fed further down at the position 4 in the boiler is added here. One minimizes the amount which normally is introduced at the position 4 and let this amount come in at the highest located air supply arrangements 8. The amount of air which is added at this upper position is suitably 5-10% of the total air fed in. This means that in the area from the position 4-8 one has a reducing gas atmosphere which substansially contains carbon monoxide and smaller amounts of hydrogen and hydrogen sulphur as reduction agents. Carbon monoxide is a less effective reduction agent for reduction of nitrogen oxide than for instance city gas and alike but one compensates this lower ability of reduction by letting the carbon monoxide act during a longer time, namely at least 3-5 seconds which is the time it takes for the gases from the position 4 to the position 8. At position 8 and directly thereafter the reducing gases are burned to carbon dioxide, water etc and dissipates the last amount of energy possible. This combustion occurs at a temperature of the order of amount 900-1.200°C at which temperature very little nitrogen oxides are formed. Through these means one gets a substantial reduction of the amount of nitrogen oxides. This is shown in the attached diagram which shows partly the content of nitrogen oxides (Noₓ) in the fumes in parts per million, partly the percentage reduction of these dependent of the distance in meter from the black liquor spray nozzles. This is self explainable and one can observe that one at the tests made gets a reduction of the nitrogen oxides of up to 40%. Under favourable conditions one can even get higher reduction. At the tests an amount of quarternary air of 5%, 8%, 6% and 2,5% of the total combustion air amount was added at the position 8.

On the figure also a further row of air inlets for the upper combustion air is shown at the position 9. These inlets can be avoided but they can also be a complement to the air inlets at the position 8. The number of air inlets at the position 9 may be the same as at position 8, suitably eight.

By arranging the upper combustion air inlet at such a high level in the boiler and up there feed a part of the combustion air that in other cases should have been fed at the tertiary air level and in such a way get a lower content of nitrogen oxides one has herethrough got the possibility that through variation of the air inlets to control the content of nitrogen oxides in the fumes. This can according to the invention be made automatically by measuring the content of nitrogen oxides in the fumes and let these measured values via a computer control the vents for feeding the air to both the primary, secondary, tertiary and quarternary air inlets. In this way one can compensate variations in the quality of the fuel etc and at every moment get a minimal amount of nitrogen oxides in the fumes.

The main feature of the invention is as said above that one adds the last part of the air at a very high level in the recovery boiler and reduces the air amount at lower levels in such a degree that one gets a reducing environment during a very long time approximately 3-5 seconds in the conventional recovery boiler. This period of time is to be compared with the period of time one earlier had when the last part of the air was added at the tertiary position 4 about 3 meters above the black liquor spray nozzles. This period of time was about 0.5 seconds which now has been prolonged to about 5 seconds.

The invention has been described in connection with a recovery boiler of normal length about 70 meters whereby the uppermost air inlet suitably is arranged at about 19 meters above the black liquor spray nozzles. At larger boilers the same ratio between length and distance above the black liquor spray nozzles can be present. For shorter boilers, however, another ratio may be suitable as at such boilers the residing time under all circumstances can be too short for the reduction of nitrogen oxides.

The invention is not limited to the embodiment example shown but it can be varied in different ways within the scope of the claims.

## Claims

1. Method for firing of black liquor in recovery boilers for obtaining fumes having a low content of nitrogen oxides (NO_{X}), wherein a part of the combustion air is fed as a last portion at a very highly located level in the boiler so that a reducing atmosphere without extra addition of reduction gases exists from the area of input of the black liquor to the last combustion air addition for a period of at least 3-5 seconds.

2. Method according to claim 1, **characterized in** that the last portion of the combustion air is added in two stages at highly located levels.

3. Method according to any of the claims 1-2, **characterized in** that the amount of combustion air that is added at the highly located level is 5-50%, preferably 5-10% of the total amount of combustion air.

4. Method according to claim 1, **characterized in** that the ratio of nitrogen oxides in the fumes is controlled by means of a control system that automatically controls the air addition at the different levels.

5. Recovery boiler for firing black liquor according to any of the claims 1-4, comprising means (1) for introducing black liquor positioned at the lower part of the boiler, means for feeding primary (3), secondary (2) and tertiary combustion air (4), said means being positioned at different levels at the lower part of the boiler, means (8, 9) for feeding quarternary combustion air at a very highly located level in the boiler so that a reducing atmosphere without extra addition of reduction gases exists from the area of feeding the black liquor to said quaternary combustion air addition during a period of time of at least 3-5 seconds.

6. Recovery boiler according to claim 5, **characterized in** that the means (8, 9) for feeding quarternary air are located at one or more levels about 10-20 meters above the level of the black liquor spray nozzles (1).

7. Recovery boiler according to any of the claims 5-6, **characterized in** that the means for addition of quarternary air consists of two rows of supply openings (8, 9) at levels of about 13 meters and about 19 meters above the black liquor spray nozzle level (1).

8. Recovery boiler according to any of the claims 5-7, **characterized in** that the uppermost row of air supply openings (8) is located in the area where the boiler is most narrow, that is near the inner "nose" (5).

9. Recovery boiler according to any of the claims 5-8, **characterized in** that it includes a control system for automatically controlling the different feeding streams of combustion air.

## Patentansprüche

1. Verfahren zur Verfeuerung von Schwarzlauge in Rückgewinnungskesseln, um Abgase mit niedrigem Gehalt an Stickstoffoxiden (Noₓ) zu erhalten, bei dem ein-Teil der Verbrennungsluft als letzte Teilmenge auf sehr hoch angeordnetem Niveau in den Kessel eingespeist wird, so daß ohne weitere Zugabe von reduzierenden Gasen mindestens 3-5 Sekunden lang eine reduzierende Atmosphäre vom Eintragebereich der Schwarzlauge weg bis zur letzten Verbrennungsluftzugabe herrscht.

2. Verfahren nach Anspruch 1, dadurch gekennzeichnet, daß die letzte Teilmenge der Verbrennungsluft in zwei Stufen auf hoch angeordneten Niveaus hinzugegeben wird.

3. Verfahren nach den Ansprüchen 1-2, dadurch gekennzeichnet, daß die Menge der auf dem hoch angeordneten Niveau hinzugegebenen Verbrennungsluft 5-50%, vorzugsweise 5-10% der Gesamtmenge an Verbrennungsluft beträgt.

4. Verfahren nach Anspruch 1, dadurch gekennzeichnet, daß das Stickstoffoxidverhältnis in den Abgasen mit Hilfe eines Regelsystems geregelt wird, das die Luftzugabe auf den verschiedenen Niveaus automatisch regelt.

5. Rückgewinnungskessel zur Verfeuerung von Schwarzlauge nach den Ansprüchen 1-4 mit am unteren Teil des Kessels angeordneten Einrichtungen (1) zur Einleitung von Schwarzlauge, auf unterschiedlichen Niveaus am unteren Teil des Kessels angeordneten Einrichtungen zur Einspeisung von primärer (3), sekundärer (2) und tertiärer Verbrennungsluft (4), sowie Einrichtungen (8, 9) zur Einspeisung von quartärer Verbrennungsluft auf einem sehr hoch angeordneten Niveau im Kessel, so daß ohne weitere Zugabe von reduzierenden Gasen mindestens 3-5 Sekunden lang eine reduzierende Atmosphäre vom Eintragebereich der Schwarz lauge weg bis zur quartären verbrennungsluftzugabe hin herrscht.

6. Rückgewinnungskessel nach Anspruch 5, dadurch gekennzeichnet, daß die Einrichtungen (8, 9) zur Einspeisung von quartärer Luft auf einem oder mehreren Niveaus etwa 10-20 Meter über dem Niveau der Schwarzlaugesprühdüsen (1) angeordnet sind.

7. Rückgewinnungskessel nach den Ansprüchen 5-6, dadurch gekennzeichnet, daß die Einrichtung zur Zugabe von quartärer Luft aus zwei Reihen von Zufuhröffnungen (8, 9) auf Niveaus von etwa 13 Metern und etwa 19 Metern über dem Schwarzlaugesprühdüsenniveau (1) besteht.

8. Rückgewinnungskessel nach den Ansprüchen 5-7, dadurch gekennzeichnet, daß die oberste Reihe von Luftzufuhröffnungen (8) in jenem Bereich angeordnet ist, wo der Kessel am schmalsten ist, d.h. nahe der inneren "Nase" (5).

9. Rückgewinnungskessel nach den Ansprüchen 5-8, dadurch gekennzeichnet, daß er ein Regelsystem zur automatischen Regelung der verschiedenen Verbrennungsluftzuströme enthält.

## Revendications

1. Méthode de brûlage de liqueur noire dans des chaudières de récupération pour l'obtention de-fumées ayant une teneur faible en oxydes d'azote (NOₓ) dans laquelle une portion de l'air de combustion est alimentée en tant que dernière portion à un niveau très élevé dans la chaudière, de sorte qu'une atmosphère réductrice existe sans l'addition supplémentaire de gaz de réduction à partir de la zone d'introduction de la liqueur noire à la dernière addition d'air de combustion pendant une période d'au moins 3-5 secondes.

2. Méthode selon la revendication 1, caractérisée en ce que la dernière portion d'air de combustion est ajoutée en deux étapes à des niveaux très élevé.

3. Méthode selon l'une quelconque des revendications 1-2, caractérisée en ce que la quantité d'air de combustion qui est ajoutée au niveau très élevé est de 5-50 %, de préférence de 5-10 % de la quantité totale de l'air de combustion.

4. Méthode selon la revendication 1, caractérisée en ce que le rapport des oxydes d'azote dans les fumées est contrôlé par l'intermédiaire d'un système de contrôle qui contrôle automatiquement l'addition d'air aux différents niveaux.

5. Chaudière de récupération de brûlage de liqueur noire selon l'une quelconque des revendications 14, comprenant des moyens (1) pour l'introduction de liqueur noire, positionnés dans la partie inférieure de la chaudière, des moyens d'alimentation d'air de combustion primaire (3), secondaire (2) et tertiaire (4), lesdits moyens étant positionnés, à des niveaux différents, dans la partie inférieure de la chaudière, des moyens (8, 9) d'alimentation d'air de combustion quaternaire à un niveau très élevé dans la chaudière, de sorte qu'une atmosphère réductrice existe sans l'addition supplémentaire de gaz de réduction à partir de la zone d'alimentation de la liqueur noire à ladite addition d'air de combustion quaternaire pendant une période de temps d'au moins 3-5 secondes.

6. Chaudière de récupération selon la revendication 5, caractérisée en ce que les moyens (8, 9) d'alimentation d'air quaternaire sont placés à un ou plusieurs niveaux à environ 10-20 mètres au-dessus du niveau des buses de pulvérisation de liqueur noire (1).

7. Chaudière de récupération selon l'une quelconque des revendications 5-6, caractérisée en ce que le moyen d'addition d'air quaternaire se compose de deux rangées d'ouvertures de fourniture (8, 9) à des niveaux à environ 13 mètres et à environ 19 mètres au-dessus du niveau des buses de pulvérisation de liqueur noire (1).

8. Chaudière de récupération selon l'une quelconque des revendications 5-7, caractérisée en ce que la rangée la plus élevée des ouvertures de fourniture d'air (8) est située dans la zone où la chaudière est la plus étroite, c'est-à-dire à proximité du "nez" interne (5).

9. Chaudière de récupération selon l'une quelconque des revendications 5-8, caractérisée en ce qu'elle comprend un système de contrôle pour le contrôle automatique des différents courants d'alimentation d'air de combustion.
